Europäisches Patentamt

(19) European Patent Office

Office européen des brevets

(11) Numéro de publication : **0 234 997 B1**

(12) **FASCICULE DE BREVET EUROPEEN**

(45) Date de publication du fascicule du brevet :
13.03.91 Bulletin 91/11

(21) Numéro de dépôt : 87400177.9

(22) Date de dépôt : 27.01.87

(51) Int. Cl.⁵ : **G01B 11/30, G01B 11/24**

(54) Procédé de détermination sans contact du relief d'une surface.

(30) Priorité : 29.01.86 FR 8601263

(43) Date de publication de la demande :
02.09.87 Bulletin 87/36

(45) Mention de la délivrance du brevet :
13.03.91 Bulletin 91/11

(84) Etats contractants désignés :
**DE ES GB IT SE**

(56) Documents cités :
DE-A- 3 020 044
FR-A- 2 454 603
GB-A- 2 022 823
US-A- 3 663 107
US-A- 4 017 188
US-A- 4 088 408
JOURNAL OF OPTICS, vol. 14, no. 1, janvier/février 1983, pages 19-23, Paris, FR; CH. GORECKI et al.: "Profilomètre optique en lumière blanche"
OPTICS COMMUNICATIONS, vol.31, no.3, décembre 1979, pages 263-266

(73) Titulaire : **ETAT FRANCAIS représenté par Le Ministère de l'Urbanisme et du Logement LABORATOIRE CENTRAL DES PONTS ET CHAUSSEES**
**58 boulevard Lefebvre**
**F-75732 Paris Cedex 15 (FR)**

(72) Inventeur : **Caussignac, Jean Marie**
**32 Avenue du Général de Gaulle**
**F-94170 Le Perreux Sur Marne (FR)**
Inventeur : **Morel, Gérard**
**39 Rue Pierre l'Homme**
**F-92400 Courbevoie (FR)**

(74) Mandataire : **Bertrand, Didier et al**
**Cabinet Beau de Loménie 55, rue d'Amsterdam**
**F-75008 Paris (FR)**

## Description

La présente invention concerne un procédé de détermination rapide et sans contact, du relief de la surface d'un objet ou d'une structure. A cet effet on utilise une méthode basée sur la détection et la mesure d'un rayonnement rétrodiffusé par la surface étudiée.

On connaît des procédés utilisant des méthodes de ce type, dans lesquels on dirige un faisceau lumineux concentré sur la surface étudiée et on observe le faisceau réfléchi ou, plus précisément rétrodiffusé par la surface. En effet, selon le relief ou la rugosité de la surface, le faisceau réfléchi est plus ou moins divergent, et l'étude de cette divergence permet d'avoir une représentation du relief ou de l'état de surface.

Selon un de ces procédés connu par le document SU-A-1 067 350, on éclaire la surface étudiée sous un certain angle et on mesure le rayonnement en divers points du faisceau réfléchi, dans un plan perpendiculaire à la direction de réflexion spéculaire.

Cette mesure permet de déterminer la répartition énergétique du rayonnement réfléchi et ainsi d'obtenir des valeurs ou des courbes représentatives du rayonnement réfléchi qui, par comparaison avec les valeurs établies en d'autres points de la surfaces, ou d'une surface de référence, permettent d'établir des caractéristiques de relief ou de rugosité à l'endroit étudié de la surface.

On remarque tout de suite qu'une mesure effectuée selon le procédé précédent est caractéristique d'un point de la surface étudiée, et que l'examen d'une surface complète nécessite d'effectuer des mesures répétitives en tous points de ladite surface, chaque mesure pouvant nécessiter plusieurs manipulations, ou alors on doit éclairer une certaine superficie de la surface, et dans ce cas la mesure effectuée est une mesure "moyenne" sur ladite superficie.

De plus, la mesure du relief d'une surface par ce procédé est essentiellement comparative, et ne détermine donc pas précisément la forme ou le profil dudit relief. En outre, le résultat de la mesure est sujet aux variations du rayonnement émis par la source, qui peuvent se produire pendant une mesure ou entre deux mesures consécutives.

Le document US-A-4 017 188 ou l'article de la revue Journal of Optics, vol. 14, n°1, janvier/février 1983, pages 19-23, Paris ; Ch. Gorecki et al : "Profilomètre optique en lumière blanche", font connaître un procédé selon lequel on irradie la surface étudiée par un faisceau lumineux, on focalise au moyen d'un objectif le faisceau rétrodiffusé par ladite surface, on sépare le faisceau issu dudit objectif en un faisceau de mesure, lequel est diaphragmé et possède une énergie totale de valeur Wf après avoir été diaphragmé, et un faisceau de référence non diaphragmé et possédant une énergie totale de valeur Wo ; on déplace par rapport à la surface étudiée, le faisceau incident et l'objectif parallèlement et à une distance moyenne constante de ladite surface, on mesure en permanence lors de ce déplacement les énergies des faisceaux de mesure et de référence, et on effectue pour chaque point de mesure le rapport de leurs valeurs respectives Wf/Wo dont la variation, lors du déplacement précédemment décrit est représentative du relief de la surface étudiée. Selon ce document, d'une part, le diaphragme est une fente, ce qui limite l'utilisation du procédé à des types de reliefs particuliers. D'autre part, et surtout, le système proposé situe l'objectif entre la source lumineuse et la surface étudiée. Cette double défocalisation conduit à une tache ponctuelle avec comme conséquence que l'étendue de mesure se trouve considérablement réduite : la défocalisation éventuelle de l'impact lumineux sur la surface étudiée limite d'autant la révolution spatiale dans le sens parallèle à cette même surface.

La présente invention a pour objet un procédé de détermination ou de mesure du relief d'une surface, qui permet de pallier les inconvénients cités ci-dessus.

Selon ledit procédé, on irradie la surface étudiée par un faisceau incident d'ondes électromagnétiques, étroit et concentré, de répartition énergétique connue et impérativement à symétrie de révolution, comme dans l'article de la revue Optics Communications, vol. 31, n° 3, décembre 1979, pages 263-266, Ft Arecchi et al "a fast versatile optical profilometer" ; puis de façon connue en soi, on focalise le faisceau rétrodiffusé par ladite surface, au moyen d'un objectif ; on sépare le faisceau issu dudit objectif en deux faisceaux ; l'un, appelé faisceau de mesure, possède une énergie totale de valeur Wf ; l'autre, appelé faisceau de référence, possède une énergie totale de valeur Wo ; on déplace par rapport à la surface étudiée le faisceau incident et l'objectif, parallèlement et à une distance moyenne constante de ladite surface ; on mesure en permanence lors de ce déplacement les énergies des faisceaux de mesure et de référence et on effectue, pour chaque point de mesure, le rapport des valeurs respectives Wf/Wo dont la variation lors du déplacement précédemment décrit est représentative du relief de la surface étudiée.

Il est précisé que dans l'ensemble de la description, on appellera séparer le faisceau toute détermination, ne serait-ce que virtuelle, d'au moins deux faisceaux représentatifs du faisceau d'entrée, sans qu'il y ait obligatoirement de séparation "physique" de ces deux faisceaux ; de même, on appellera diaphragme tout moyen permettant de n'appréhender qu'une partie d'un faisceau, dont la section est limitée par une surface donnée.

Ainsi, de façon connue, la surface étudiée, du fait de son relief, rétrodiffuse le faisceau incident. Le faisceau rétrodiffusé est focalisé par un objectif, et si la distance optique réelle entre l'objectif et le point de la surface irradié par le faisceau incident varie, la distance optique réelle entre l'objectif et l'image dudit point varie également, ainsi que l'angle au sommet du faisceau convergent issu de l'objectif.

On voit dès lors que le résultat de la mesure, qui est le rapport Wf/Wo des valeurs des énergies respectives des faisceaux de mesure et de référence, issus par séparation d'un unique faisceau, est indépendant des éventuelles variations énergétiques dudit faisceau incident et donc d'éventuelles fluctuations de la source.

Un avantage considérable du procédé est que le faisceau incident est un faisceau étroit et concentré (i.e. sensiblement cylindrique), mais qu'i l n'a pas besoin d'être strictement ponctuel, ce qui facilite indéniablement la mise en oeuvre du procédé. Il n'existe qu'une seule défocalisation, et la tache lumineuse a une taille constante et une répartition énergétique de révolution.

Par ailleurs, on peut encore remarquer que, en restant dans des limites raisonnables imposées par la mise en oeuvre du procédé, celui-ci peut être appliqué à la mesure de reliefs dans un large champ de granulométrie, moyennant l'adaptation de certains paramètres déterminés pour la mise en oeuvre du procédé.

Enfin, le résultat de la mesure effectuée selon le procédé objet de l'invention est une valeur caractéristique de la distance optique réelle entre l'objectif et le point considéré de la surface étudiée, et n'est pas une valeur comparative à une surface de référence. Ceci est particulièrement intéressant car on peut alors représenter pratiquement directement le profil du relief de la surface étudiée.

Une disposition avantageuse du procédé selon l'invention consiste en ce que l'on dirige le faisceau incident orthogonalement à la surface étudiée au travers d'un objectif permettant d'observer, également orthogonalement à ladite surface, le faisceau rétrodiffusé. Cette disposition présente le grand intérêt d'éviter le phénomène d'ombres projetées qui peut se produire lors d'une irradiation et d'une observation faite obliquement par rapport à la surface, et supprime de la sorte une part importante d'erreurs de mesure.

La présente invention peut être mise en oeuvre grâce à un dispositif de mesure du relief d'une surface d'un objet ou d'une structure, sans contact direct avec ladite surface comprenant :

    – une source émettant un faisceau d'ondes électromagnétiques étroit et concentré, de répartition énergétique connue et à symétrie de révolution qui est dirigé sur la surface étudiée et rétrodiffusé par celle-ci ;

    – un objectif qui focalise le faisceau rétrodiffusé ;

    – un dispositif séparateur, placé en aval de l'objectif qui sépare le faisceau issu dudit objectif en deux faisceaux appelés l'un faisceau de mesure, l'autre faisceau de référence ;

    – des moyens permettant de déplacer le faisceau incident et l'objectif par rapport à la surface étudiée, parallèlement et à une distance moyenne constante de ladite surface ;

    – des moyens de mesure placés sur les faisceaux de mesure et de référence, pour déterminer en permanence les valeurs respectives Wf et Wo des énergies desdits faisceaux de mesure et de référence lors du déplacement relatif du faisceau incident et de l'objectif par rapport à la surface étudiée ;

    – des moyens de calcul du rapport Wf/Wo des valeurs respectives des énergies des faisceaux de mesure et de référence, pour chaque point de mesure.

Selon l'invention, on reçoit le faisceau issu de l'objectif sur la surface sensible d'un détecteur constitué de façon à pouvoir délimiter avec précision des zones différentes lors de la transformation du rayonnement en signal électrique, on mesure d'une part l'énergie Wo reçue sur une première zone correspondant à la totalité de la section du faisceau de référence, et d'autre part, l'énergie Wf reçue sur une zone réduite sensiblement circulaire ou annulaire incluse dans la première zone.

D'autres particularités et avantages seront décrits plus en détail en regard des schémas annexés dans lesquels :

    – la figure 1 est un schéma d'un dispositif connu de l'état de la technique,

    – la figure 2 est une représentation graphique de la variation du rapport Wf/Wo en fonction de la distance optique Z entre l'objectif et la surface étudiée, et ceci pour plusieurs distances diaphragme-objectif.

    – la figure 3 est le schéma de réalisation préféré de l'invention.

    – les figures 3A et 3B montrent en vue de face schématique les détecteurs respectivement matriciel ou annulaire utilisé dans le mode de réalisation de la figure 3.

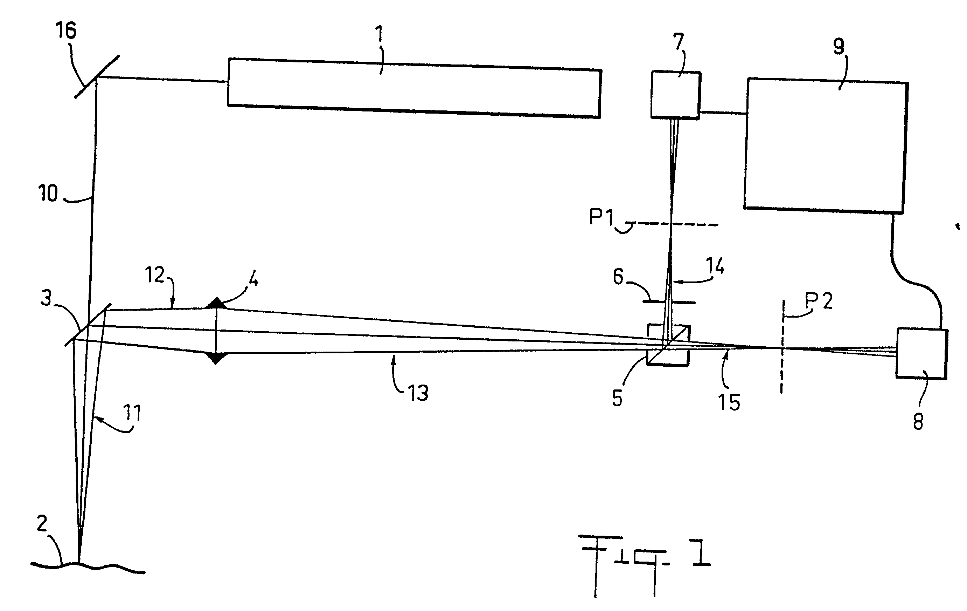

Dans la figure 1, la source de rayonnement 1 qui est ici un laser, mais pourrait être une source d'un rayonnement électromagnétique visible ou non, émet un faisceau 10, qui peut, pour des raisons pratiques de réalisation du dispositif et d'encombrement, être rétrodiffusé à 90° par un miroir 16, ceci n'influant pas sur les caractéristiques de faisceau.

Ledit faisceau incident 10 est dirigé sur la surface étudiée 2, réfléchi ou plutôt rétrodiffusé par celle-ci en un faisceau divergent 11, 12 ; ledit faisceau divergent 11, 12 est ensuite focalisé par un objectif 4 en un faisceau convergent 13.

Dans le schéma de la figure 1, on a représenté un dispositif de renvoi 3 du faisceau rétrodiffusé 11, en un faisceau 12 faisant un certain angle avec le faisceau 11. En effet, bien que l'on puisse, selon l'invention, diriger le faisceau incident 10 et observer le faisceau rétrodiffusé suivant une direction oblique par rapport à la surface 2, un avantage indéniable réside dans le fait de pouvoir diriger le faisceau 10 et observer le faisceau rétrodiffusé 11 orthogonalement à la surface 2. Ceci est rendu possible par l'utilisation dudit dispositif 3, placé sur le trajet des faisceaux, orienté de préférence à 45° par rapport à la direction du faisceau incident 10, et constitué par une lame semi-transparente, un miroir percé d'un orifice par lequel peut passer le faisceau incident étroit 10, ou un dispositif similaire.

Le faisceau convergent 13 issu de l'objectif est dirigé sur un dispositif séparateur qui est selon la figure 1 un cube séparateur 5. Dans ce dispositif séparateur, le faisceau 13 est séparé en deux faisceaux 14 et 15, de préférence orthogonaux.

Le faisceau 15, appelé faisceau de référence, est dirigé sur le détecteur référencé 8 qui mesure l'énergie dudit faisceau 15.

Le faisceau 14, appelé faisceau de mesure, passe au travers d'un diaphragme 6, avant d'être dirigé sur le détecteur mesure 7, qui mesure l'énergie dudit faisceau 14 diaphragmé.

Les détecteurs 7 et 8 sont des dispositifs qui mesurent l'énergie des rayonnements qu'ils reçoivent et la transforment en un signal électrique proportionnel à l'énergie reçue. Les signaux émis par les détecteurs 7 et 8 sont ensuite traités dans une unité électronique de traitement de signal 9.

Pour effectuer une mesure avec le dispositif schématisé figure 1, on déplace par rapport à la surface étudiée 2, l'ensemble du dispositif constitué par la source 1, le miroir 16, la lame semi-transparente 3, l'objectif 4, le cube séparateur 5, le diaphragme 6 et les détecteurs 7 et 8.

Le déplacement est effectué parallèlement à la surface étudiée 2 et à distance moyenne constante, c'est-à-dire parallèlement à la surface enveloppe de ladite surface 2, les variations du relief de ladite surface étant négligeables par rapport aux dimensions de l'ensemble du dispositif.

On a donc, lors de ce déplacement relatif du dispositif par rapport à la surface 2, des variations de la distance optique réelle Z séparant l'objectif 4 du point irradié de la surface étudiée 2. Lorsque la distance Z varie, la position des plans images $P_1$ et $P_2$ varie également, et donc le diamètre du faisceau 14, juste en amont du diaphragme 6, varie également. Donc lorsque la distance Z va varier, l'énergie du faisceau de mesure 14 traversant le diaphragme 6 va aussi varier.

Ainsi lorsque le faisceau incident 10 va irradier un point proéminent de la surface 2, la distance Z va diminuer, le plan image $P_1$ va s'éloigner de l'objectif 4, le diamètre du faisceau en amont du diaphragme 6 va augmenter, et donc le diaphragme 6 laissera passer une plus faible quantité d'énergie.

Cette énergie Wf est mesurée par le détecteur mesure 7. Alors que l'énergie Wo du faisceau référence 15, non diaphragmé, mesurée par le détecteur référence 8, sera exactement proportionnelle à l'énergie du faisceau rétrodiffusé 11, l'énergie mesurée par le détecteur 7 sera variable, "modulée" par le diaphragme 6.

Pour assurer l'exactitude de la mesure, il est nécessaire que chaque détecteur 7, 8 présente une surface sensible suffisante pour intégrer la totalité du rayonnement qu'il reçoit, quelle que soit la position des plans images $P_1$ et $P_2$. Il est également nécessaire que le diaphragme 6 soit en permanence hors de la position du plan $P_1$ et que son diamètre soit plus petit ou au plus égal au diamètre du faisceau 14 juste en amont dudit diaphragme 6.

Il va de soi que la réalisation de la figure 1 dans laquelle les plans images $P_1$ et $P_2$ se situent en aval du cube séparateur 5, est plus avantageuse au regard des nécessités énoncées ci-dessus, car permettant de maintenir la surface sensible des détecteurs dans des dimensions suffisamment réduites. Dans le dispositif de l'invention, les plans images $P_1$ et $P_2$ sont confondus, en amont du cube séparateur 5, ce qui entraîne bien évidemment des faisceaux 14 et 15 divergents et donc nécessite d'accroître les dimensions des détecteurs.

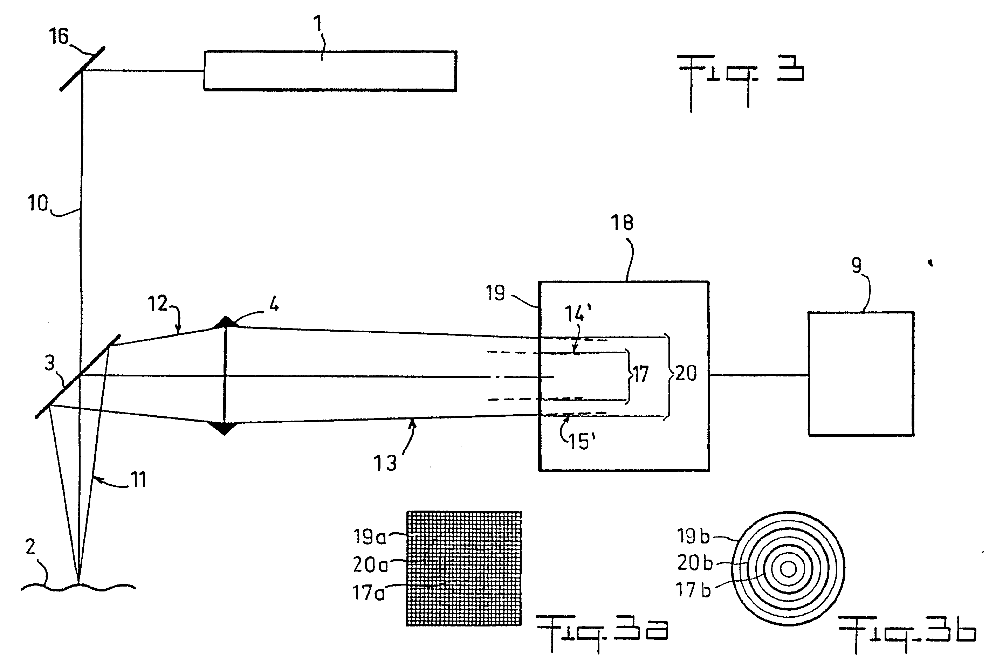

A la figure 3, on a représenté un schéma du dispositif selon l'invention dans lequel le dispositif séparateur et le diaphragme sont confondus dans le même plan que la surface sensible du détecteur des moyens de mesure.

Dans ce cas, on admet en fait que le faisceau de référence 15' symbolisé en pointillés sur la figure 3, est constitué de l'intégralité du faisceau 13 issu de l'objectif et que le faisceau de mesure 14' est constitué d'une partie, également symbolisée en pointillés, du faisceau 13, limitée à une section 17 circulaire coaxiale audit faisceau.

La séparation du faisceau 13 issu de l'objectif est alors réalisée directement par le calculateur relié au détecteur 18. Celui-ci, au niveau de sa surface sensible 19, est constitué de façon à pouvoir délimiter avec précision des zones différentes, lors de la transformation du rayonnement en signal électrique, et est plus large que la section 20 du faisceau intégral 13.

On comprend aisément que le faisceau de mesure n'est pas limité "matériellement" par un diaphragme, mais que cette limitation est ainsi réalisée au niveau de la surface sensible, par le choix de la zone correspondant à la section 17 limitant le faisceau de mesure.

Si les caractéristiques du détecteur 18 le permettent, on peut tout aussi bien choisir comme zone 17 limitant le faisceau de mesure, une surface circulaire ou une surface annulaire, à la seule condition que le faisceau 13 irradie au moins toute ladite surface 17, et que cette surface soit coaxiale audit faisceau 13 issu de l'objectif.

On peut employer comme surface sensible 19 une cellule matricielle 19a (fig.3A) ou annulaire 19b (fig.3B), dont la résolution est la plus fine possible (les dessins sont à cet égard très schématiques). On peut notamment utiliser la surface sensible des caméras solides DTC (détecteurs à transferts de charge).

La séparation et la limitation réalisées par la surface sensible du détecteur induisent donc deux valeurs d'énergie, l'une Wf correspondant au faisceau de mesure limité par la zone 17a, 17b, l'autre Wo correspondant au faisceau de référence, donc à l'intégralité du faisceau 13 issu de l'objectif, reçue sur la zone 20a, 20b, et comprenant la somme de l'énergie Wf plus l'énergie du rayonnement capté par le détecteur hors de la surface 17a, 17b.

Les signaux électriques émis par les détecteurs sont injectés dans le dispositif de traitement de signal 9 qui en effectue en temps réel, pour tout point, le rapport par une division analogique. Le signal résultant est I (Z), fonction de la distance Z séparant l'objectif 4 de la surface étudiée 2, tel que I (z) = Wf /Wo.

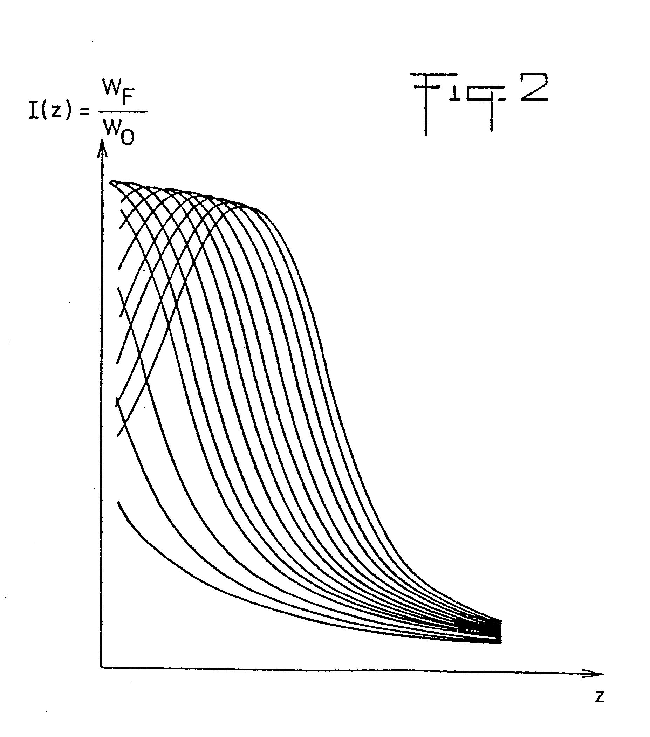

La théorie, confirmée par l'expérience montre que la variation, en un point, du rapport Wf /Wo = I (z) en fonction de la distance surface-objectif z, est représentée par une courbe en "cloche" non symétrique (voir figure 2). Les deux branches de la courbe correspondent aux positions amont et aval du plan image $P_1$, par rapport au diaphragme, le maximum étant atteint à la coïncidence.

On voit immédiatement que la zone utile de fonctionnement du dispositif se situe dans la partie quasiment linéaire de la courbe, correspondant à une variation maximale du rapport Wf/Wo, lorsque la distance optique réelle z entre l'objectif 6 et la surface 2 varie.

Cette zone utile de travail peut être adaptée à l'étendue de mesure et aux performances souhaitées, en modifiant un ou plusieurs des paramètres du dispositif. Lesdits paramètres sont les suivants :

1. diamètre de l'objectif
2. distance focale de l'objectif
3. diamètre du diaphragme de modulation
4. distance diaphragme-objectif
5. "distance moyenne" surface-objectif

L'ensemble des courbes représentées à la figure 2 correspond à une variation du paramètre 4 (distance diaphragme-objectif), les paramètres 1, 2, 3 et 5 étant fixés.

La non-linéarité de I (z) en fonction de la distance z, peut nécessiter d'effectuer des corrections dans le traitement du signal I (z). Ces corrections sont effectuées par le dispositif de traitement de signal 9. Ledit dispositif 9 effectue ensuite la conversion du signal analogique I (z) en signal numérique qui permet de déterminer les caractéristiques du profil réel pour en déduire les paramètres de rugosité de surface.

Il est possible de corriger les variations de I (Z) en fonction de la lumière ambiante ou parasite. Pour ce faire, on mesure l'énergie Wi reçue sur une collecte individuelle de mesure extérieure à la zone 20a, 20b (une cellule de coin du détecteur matriciel 19a ou la cellule annulaire extérieure du détecteur annulaire 19b), et si Nf et No représentent le nombre de cellules des zones respectives 17 et 20, on effectue le rapport : I'(Z) = (Wf - NfWi) / (Wo - NoWi).

Par la possibilité de modifier les paramètres du dispositif, celui-ci peut être utilisé pour diverses applications. Un balayage dans deux directions orthogonales fournit une reconstitution en trois dimensions du relief de la surface. Il peut s'agir suivant la géométrie choisie, de la macrorugosité, de la microrugosité, du profil en long ou de la mesure d'altitude sans contact.

Le procédé est utile pour la détermination de la rugosité ou du relief d'une chaussée, mais ses applications ne sont nullement limitatives.

## Revendications

1. Procédé de détermination ou de mesure du relief d'une surface (2) d'un objet ou d'une structure, sans contact direct avec ladite surface par une méthode dans laquelle on irradie la surface étudiée (2) par un faisceau d'ondes électromagnétiques, on focalise au moyen d'un objectif (4) le faisceau rétrodiffusé (11, 12) par ladite surface (2), on sépare le faisceau (13) issu dudit objectif (4) en un faisceau de mesure (14, 14'), lequel possède une énergie totale de valeur Wf et un faisceau de référence (15, 15') possédant une énergie totale de valeur Wo, on déplace par rapport à la surface étudiée (2), le faisceau incident (10) et l'objectif (4) parallèlement à une distance moyenne constante de ladite surface, on mesure en permanence lors de ce déplacement les énergies des faisceaux de mesure et de référence, et on effectue pour chaque point de mesure le rapport de leurs valeurs respectives Wf/Wo dont la variation, lors du déplacement précédemment décrit, est représentative du relief de la surface étudiée, en utilisant, pour irradier la surface (2), un faisceau incident (10) étroit et concentré de répartition énergétique connue et à symétrie de révolution, caractérisé en ce qu'on reçoit le faisceau (13) issu de l'objectif (4) sur la surface sensible (19) d'un détecteur (18) constitué de façon à pouvoir délimiter avec précision des zones différentes lors de la transformation du rayonnement en signal électrique, on mesure d'une part, l'énergie Wo reçue sur une première zone correspondant à la totalité de la section du faisceau de référence, et d'autre part, l'énergie Wf reçue sur une zone réduite sensiblement circulaire ou annulaire incluse dans la première zone.

2. Procédé selon la revendication 1, caractérisé en ce qu'on dirige le faisceau incident (10) orthogonalement à la surface étudiée (2) au travers d'un dispositif (3) permettant d'observer également orthogonalement à ladite surface, le faisceau rétrodiffusé.

3. Procédé selon l'une des revendications 1 ou 2, caractérisé en ce que l'on place l'objectif (4) à une distance optique moyenne de la surface étudiée (2) telle que la variation du rapport Wf/Wo soit maximale lorsque la distance optique réelle entre ledit objectif et ladite surface étudiée varie.

4. Procédé selon l'une des revendications 1 à 3, caractérisé en ce que le faisceau de référence est constitué de l'intégralité du faisceau (13) issu de l'objectif, et en ce que le faisceau de mesure est constitué d'une partie dudit faisceau (13) de l'objectif, dont la section est limitée à une surface circulaire ou annulaire coaxiale audit faisceau (13).

5. Procédé selon la revendication 2, caractérisé en ce que ledit dispositif (3) est une lame semi-transparente orientée de préférence à 45° de la direction du faisceau incident.

6. Procédé selon la revendication 2, caractérisé en ce que ledit dispositif (3) est un miroir percé orienté de préférence à 45° de la direction du faisceau incident.

7. Procédé selon l'une des revendications 1 à 6, caractérisé en ce que le faisceau incident (10) est un faisceau laser.

## Ansprüche

1. Verfahren zur berührungslosen Bestimmung oder Messung der Beschaffenheit der Oberfläche (2) eines Objekts oder einer Struktur, bei dem
   – man die zu untersuchende Oberfläche (2) mit einem elektromagnetischen Strahlenbündel bestrahlt,
   – man das von der Oberfläche (2) zurückgestreute Strahlenbündel (11, 12) mittels eines Objektives (4) fokussiert,
   – man das aus dem Objektiv (4) kommende Bündel (13) aufspaltet in ein Meßbündel (14, 14'), das eine Gesamtenergie des Wertes Wf hat und in ein Referenzbündel (15, 15'), das eine Gesamtenergie des Wertes Wo hat,
   – man in bezug auf die zu untersuchende Oberfläche (2) das einfallende Bündel (10) und das Objektiv (4) parallel um eine im Durchschnitt konstante Entfernung längs der Oberfläche verschiebt,
   – man während der Verschiebung fortlaufend die Energien des Meß- sowie des Referenzbündels mißt, und
   – man für jeden Meßpunkt das Verhältnis der jeweiligen Werte Wf/Wo, deren Veränderung bei der vorher beschriebenen Verschiebung ein Maß für die Beschaffenheit der zu untersuchenden Oberfläche ist, bildet, indem man zum Bestrahlen der Oberfläche (2) ein enges einfallendes Strahlenbündel (10) mit konzentrischer, bekannter Energieverteilung benutzt, das zylindersymmetrisch ist, dadurch **gekennzeichnet, daß**
   – man das von dem Objektiv (4) kommende Bündel (13) mit der empfindlichen Oberfläche (19) eines Detektors (18) empfängt, der so ausgebildet ist, daß er bei der Umwandlung der Strahlen in elektrische Signale die verschiedenen Bereiche genau begrenzen kann, und daß
   – man einerseits die Energie Wo mißt, die von einem ersten Bereich empfangen wird und der Gesamtheit des Referenzteiles des Bündels entspricht und andererseits die Energie Wf, die man in einem verkleinerten Bereich empfängt, der in etwa kreis- oder ringförmig ist und innerhalb des ersten Bereiches liegt.

2. Verfahren nach Anspruch 1, dadurch gekennzeichnet, daß man das einfallende Bündel (10) auf die zu untersuchende Oberfläche (2) rechtwinklig durch eine Vorrichtung (3) hindurch richtet, die gleichzeitig rechtwinklig zu der Oberfläche die Beobachtung des zurückgestreuten Bündels erlaubt.

3. Verfahren nach einem der Ansprüche 1 oder 2, dadurch gekennzeichnet, daß man das Objektiv (4) in einer mittleren optischen Entfernung von der zu untersuchenden Oberfläche (2) anordnet, so daß die Veränderung des Verhältnisses Wf/Wo maximal wird, wenn die tatsächliche optische Distanz zwischen dem Objektiv und der zu untersuchenden Oberfläche variiert.

4. Verfahren nach einem der Ansprüche 1 bis 3, dadurch gekennzeichnet, daß das Referenzbündel durch die Gesamtheit des Bündels (13), das aus dem Objektiv kommt, gebildet wird, und dadurch, daß das Meßbündel durch einen Teil dieses Bündels (13) aus dem Objektiv gebildet wird, dessen Teil durch eine kreisförmige oder ringförmige Fläche begrenzt wird, die zu dem Bündel (13) koaxial liegt.

5. Verfahren nach Anspruch 2, dadurch gekennzeichnet, daß die Vorrichtung (3) eine halbdurchlässige Platte ist, die vorzugsweise unter 45° in bezug auf die Richtung des einfallenden Bündels ausgerichtet ist.

6. Verfahren nach Anspruch 2, dadurch gekennzeichnet, daß die Vorrichtung (3) ein durchbohrter Spiegel ist, der vorzugsweise unter 45° in bezug auf die Richtung des einfallenden Bündels angeordnet ist.

7. Vorrichtung nach einem der Ansprüche 1 bis 6, dadurch gekennzeichnet, daß das einfallende Bündel (10) ein Laserbündel ist.

## Claims

1. Method of determining or measuring relief on the surface (2) of an object or a structure without making direct contact with said surface, wherein :

the surface under investigation (2) is illuminated by a beam of electromagnetic waves ;

an objective lens (4) is used to focus the beam (11, 12) as back-scattered from said surface (2) ;

the beam (13) coming from said objective lens (4) is split into a measurement beam (14, 14'), which latter has a total energy of value Wf, and a reference beam (15, 15') having a total energy of value Wo ;

the incident beam (10) and the objective lens (4) are displaced relative to the surface under investigation (2) parallel thereto and at a constant average distance therefrom ;

the energies of the measurement beam and the reference beam are continuously measured during said displacement, and for each measurement point the ratio of their respective values Wf/Wo is determined, with the variation in said ratio during said displacement being representative of the relief in the surface (2), an incident beam (10) which is narrow, concentrated, and of known circularly symmetrical energy distribution, characterized in that the beam (13) from the objective lens (4) is received on the sensitive surface (19) of a detector (18) constituted so as to be able to accurately delimit various zones when transforming radiation into an electrical signal, with the energy Wo being measured as received on a first zone corresponding to the entire cross-section of the reference beam, and with the energy Wf being measured as received on a substantially circular, annular, smaller zone included in the first zone.

2. Method according to claim 1, characterized in that the incident beam (10) is directed orthogonally to the surface under investigation (2) through a device (3) enabling the back-scattered beam from said surface to be observed likewise orthogonally to said surface.

3. Method according to one of claims 1 or 2, characterized in that the objective lens (4) is placed at an average optical distance from the surface under investigation (2) such that variation in the ratio Wf/Wo is at a maximum when the real optical distance between said objective lens and said surface under investigation is varying.

4. Method according to one of claims 1 to 3, characterized in that the reference beam is constituted by the entire beam (13) coming from the objective lens, and in that the measurement beam is constituted by a portion of said beam (13) from the objective lens, with the cross-section of said portion being limited to a circular or annular area which is coaxial with said beam (13).

5. Method according to claim 2, characterized in that said device (3) is a semi-transparent plate preferably oriented at an angle of 45° to the direction of the incident beam.

6. Method according to claim 2, characterized in that said device (3) is a mirror having a hole therethrough preferably oriented at an angle of 45° to the direction of the incident beam.

7. Method according to one of claims 1 to 6, characterized in that the incident beam (10) is a laser beam.

Fig. 1

EP 0 234 997 B1

Fig. 2

$$I(z) = \frac{W_F}{W_O}$$

Fig.3

Fig.3a

Fig.3b

EP 0 234 997 B1